(19) Europäisches Patentamt / European Patent Office / Office européen des brevets

(11) **EP 4 325 745 A1**

(12) **EUROPEAN PATENT APPLICATION**
published in accordance with Art. 153(4) EPC

(43) Date of publication:
**21.02.2024 Bulletin 2024/08**

(21) Application number: **22798518.1**

(22) Date of filing: **24.02.2022**

(51) International Patent Classification (IPC):
**H04B 10/294** (2013.01)     **H01S 3/00** (2006.01)

(52) Cooperative Patent Classification (CPC):
**H01S 3/00; H04B 10/294**

(86) International application number:
**PCT/CN2022/077656**

(87) International publication number:
**WO 2022/233176 (10.11.2022 Gazette 2022/45)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **07.05.2021 CN 202110496993**

(71) Applicant: **Huawei Technologies Co., Ltd.
Shenzhen, Guangdong 518129 (CN)**
(72) Inventors:
- **HU, Hangting
  Shenzhen, Guangdong 518129 (CN)**
- **CHANG, Zhiwen
  Shenzhen, Guangdong 518129 (CN)**
- **YOU, Guodong
  Shenzhen, Guangdong 518129 (CN)**

(74) Representative: **Gill Jennings & Every LLP
The Broadgate Tower
20 Primrose Street
London EC2A 2ES (GB)**

(54) **OPTICAL AMPLIFIER, OPTICAL SIGNAL AMPLIFICATION METHOD AND SYSTEM, AND OPTICAL AMPLIFIER GAIN ADJUSTMENT METHOD AND SYSTEM**

(57)     This application discloses an optical amplifier, an optical signal amplification method, a gain adjustment method of the optical amplifier, and a system. The optical amplifier includes a pump light source, a coupler, a gain medium, and a gain flattening filter. A gain curve of the optical amplifier is symmetric relative to a target gain curve. Distortion states of any two symmetric gain curves are opposite. The pump light source is configured to provide pump light. The coupler is configured to couple the pump light to the gain medium. The gain medium is configured to amplify, based on the pump light, signal light input to the optical amplifier. The gain flattening filter is configured to filter the amplified signal light, and output the filtered signal light. The gain curve in this application is symmetrically distributed, so that distortions of the gain curve can be effectively compensated for, and flatness of the gain curve can be improved.

FIG. 2

EP 4 325 745 A1

## Description

This application claims priority to Chinese Patent Application No. 202110496993.6, filed on May 7, 2021 and entitled "OPTICAL AMPLIFIER, OPTICAL SIGNAL AMPLIFICATION METHOD, GAIN ADJUSTMENT METHOD OF OPTICAL AMPLIFIER, AND SYSTEM", which is incorporated herein by reference in its entirety.

## TECHNICAL FIELD

This application relates to the field of optical communication, and in particular, to an optical amplifier, an optical signal amplification method, a gain adjustment method of the optical amplifier, and a system.

## BACKGROUND

In access, convergence, county and township level, and other metro wavelength division multiplexing scenarios, on-board integration of various optical components or optical modules is a development trend in the industry. On-board integration means that optical components or optical modules such as an optical amplifier (OA), an optical multiplexer/demultiplexer, and an optical attenuator and corresponding control and drive circuits thereof are integrated on one board. This can greatly reduce a volume, costs, and power consumption of a wavelength division multiplexing device, and reduce a maintenance difficulty of network hardware.

The on-board integration requires that optical components have characteristics such as miniaturization, low power consumption, and low costs. In implementation of the on-board integration, it is difficult to miniaturize an active component because the active device has a characteristic of needing power supply. In particular, a function of the optical amplifier is to convert electric energy into light energy and amplify an optical signal. Therefore, requirements on power consumption and heat dissipation also hinder development of miniaturization of the optical amplifier.

Types of optical amplifiers in a conventional technology include an erbium-doped fiber amplifier (EDFA), a semiconductor optical amplifier (SOA), a Raman fiber amplifier (RFA), and the like. In terms of gain features, the optical amplifier includes two types: a fixed gain amplifier and an adjustable gain amplifier. The fixed gain amplifier has a simple structure and is easily miniaturized. However, a gain of the fixed gain amplifier is fixed, and in network application, an external variable optical attenuator (VOA) needs to be used to perform gain adjustment, resulting in poor system performance and reliability. The gain adjustable amplifier implements a variable gain through a built-in VOA and photoelectric detector (PD), and has better system performance, but has a larger volume, higher costs, and higher power consumption. Therefore, how to achieve miniaturization, low power consumption, and low costs, and satisfy on-board integration conditions while ensuring that the gain of the optical amplifier is adjustable and the system performance does not deteriorate is a problem that currently needs to be resolved for the optical amplifier.

## SUMMARY

This application provides an optical amplifier, an optical signal amplification method, a gain adjustment method of the optical amplifier, and a system, to reduce a volume, power consumption, and costs of the amplifier, and maintain good gain flatness and network performance.

According to a first aspect, an embodiment of this application provides an optical amplifier. The optical amplifier includes a pump light source, a coupler, a gain medium, and a gain flattening filter. A gain curve of the optical amplifier is symmetric relative to a target gain curve, and distortion states of any two symmetric gain curves are opposite. The pump light source is configured to provide pump light. The coupler is configured to couple the pump light to the gain medium. The gain medium is configured to amplify, based on the pump light, signal light input to the optical amplifier. The gain flattening filter is configured to filter the amplified signal light, and output the filtered signal light.

The gain curve of the optical amplifier in this application is symmetrically designed, so that distortions generated by the gain curve can be compensated for when a related component such as a temperature control box is omitted, to enable the optical amplifier to maintain good gain flatness and network performance.

In a possible implementation, a gain value of the target gain curve is an average gain value of the optical amplifier or a network average span loss value of a network in which the optical amplifier is located.

The target gain curve is an axis of centro-symmetry of a plurality of gain curves within a gain range of the optical amplifier, so that the gain curve of the optical amplifier is symmetric, and distortions generated by two gain curves that are symmetric to each other can be canceled out mutually.

In a possible implementation, the pump light source is further configured to adjust a gain value of the optical amplifier.

The gain value of the optical amplifier is adjusted using the pump light source, so that a related component such as the VOA inside the optical amplifier can be omitted, thereby reducing the volume, costs, and power consumption of the optical amplifier.

In a possible implementation, the gain value of the amplifier varies with an operating current or power of the pump light source.

In a possible implementation, an attenuation curve of the gain flattening filter is designed based on the target gain curve.

The gain flattening filter in this application is designed based on the target gain curve, so that a gain curve of the optical amplifier within the gain range is symmetric relative to the target gain curve, and distortions generated by two gain curves symmetric to each other are canceled out mutually.

In a possible implementation, the optical amplifier is a single-stage optical amplifier.

Because the component such as the VOA may be omitted from the optical amplifier in this application, and a loss is small, single-stage amplification can meet a performance requirement of a network.

In a possible implementation, the optical amplifier further includes an isolator, and the isolator is configured to control a transmission direction of the signal light.

According to a second aspect, an embodiment of this application provides an optical network system. The optical network system includes a plurality of the optical amplifiers according to any one of the first aspect or the possible implementations of the first aspect.

In a possible implementation, the plurality of optical amplifiers include a first optical amplifier and a second optical amplifier, the first optical amplifier is set to have a first gain value, the second optical amplifier is set to have a second gain value, and distortion states of a gain curve corresponding to the first gain value and a gain curve corresponding to the second gain value are opposite.

The distortion states of the gain curves of the first optical amplifier and the second optical amplifier are opposite, so that distortions generated by the gain curves can be effectively canceled out, and network performance can be improved.

According to a third aspect, an embodiment of this application provides an optical signal amplification method, applied to an optical amplifier. The method includes: providing pump light; coupling the pump light to a gain medium; amplifying, based on the pump light, signal light input to the optical amplifier, where a gain curve of the optical amplifier is symmetric relative to a target gain curve, and distortion states of any two symmetric gain curves are opposite; and filtering the amplified signal light, and outputting the filtered signal light.

In a possible implementation, a gain value of the target gain curve is an average gain value of the optical amplifier or a network average span loss value of a network in which the optical amplifier is located.

In a possible implementation, the method further includes: adjusting a gain value of the optical amplifier.

In a possible implementation, the gain value of the optical amplifier varies with an operating current or power of a pump light source in the optical amplifier.

In a possible implementation, the optical amplifier is a single-stage optical amplifier.

In a possible implementation, the method further includes: controlling a transmission direction of the signal light.

According to a fourth aspect, an embodiment of this application provides a gain adjustment method of an optical amplifier, where the method is applied to the optical network system in the second aspect. The plurality of optical amplifiers include a first optical amplifier and a second optical amplifier. The method includes: setting the first optical amplifier to have a first gain value, and setting the second optical amplifier to have a second gain value, where distortion states of a gain curve corresponding to the first gain value and a gain curve corresponding to the second gain value are opposite.

In a possible implementation, the method includes: determining a residual non-flat gain of the optical network system, where the residual non-flat gain is obtained based on gain values of the plurality of optical amplifiers and a gain value of the target gain curve; and determining, based on the residual non-flat gain, whether gain adjustment needs to be performed on at least one of the plurality of optical amplifiers.

In a possible implementation, the method includes: when an absolute value of the residual non-flat gain is greater than or equal to a preset adjustment threshold, determining that the gain adjustment needs to be performed on at least one of the plurality of optical amplifiers.

In a possible implementation, the method includes: when the residual non-flat gain is not equal to zero, determining that the gain adjustment needs to be performed on at least one of the plurality of optical amplifiers.

In a possible implementation, the method includes: determining a to-be-adjusted optical amplifier, where the to-be-adjusted optical amplifier has a highest gain or a lowest gain, or a single-span link loss value of an upstream span in which the to-be-adjusted optical amplifier is located is the largest or the smallest.

In a possible implementation, when the residual non-flat gain is greater than zero, the to-be-adjusted optical amplifier has the highest gain, or the single-span link loss value of the upstream span in which the to-be-adjusted optical amplifier is located is the largest.

In a possible implementation, when the residual non-flat gain is less than zero, the to-be-adjusted optical amplifier has the lowest gain, or the single-span link loss value of the upstream span in which the to-be-adjusted optical amplifier is located is the smallest.

An optical amplifier with a highest or lowest gain is adjusted, so that distortions of gain curves of an optical amplifier with a high gain value and an optical amplifier with a low gain value can be mutually canceled out, thereby optimizing power flatness and network performance of optical signals on different wavelengths.

According to a fifth aspect, an embodiment of this application provides a control apparatus. The controller includes a processor and an interface. The interface is configured to communicate with a plurality of optical amplifiers. The processor is configured to execute instructions, to perform the method in any one of the fourth aspect or the possible implementations of the fourth aspect.

According to a sixth aspect, an embodiment of this application provides a computer program product including instructions. When the computer program product is run on a computer, the computer is enabled to implement the method in any one of the fourth aspect or the possible implementations of the fourth aspect.

According to a seventh aspect, an embodiment of this application provides a computer-readable storage medium. The computer-readable storage medium stores instructions. When the instructions are run on a computer, the computer is enabled to perform the method in any one of the fourth aspect or the possible implementations of the fourth aspect.

## BRIEF DESCRIPTION OF DRAWINGS

The following describes in more details embodiments of this application with reference to the accompanying drawings.

FIG. 1 is a schematic diagram of a network scenario in which an optical amplifier is applied;
FIG. 2 is a schematic diagram of a structure of a single-stage optical amplifier according to this application;
FIG. 3 is a schematic diagram of a structure of an optical amplifier according to this application;
FIG. 4 is a schematic diagram of a structure of a multi-stage optical amplifier according to this application;
FIG. 5 is a schematic diagram of curves of radiation coefficients and absorption coefficients on different wavelengths of an erbium-doped fiber according to this application;
FIG. 6 is an example flowchart of a method for designing an attenuation curve of a gain flattening filter according to this application;
FIG. 7a is a schematic diagram of an iteration of a gain curve according to this application;
FIG. 7b is a schematic diagram of an iteration of a GFF attenuation curve according to this application;
FIG. 7c is a schematic diagram of an iteration of a GFF correction attenuation curve according to this application;
FIG. 8 is a schematic diagram of a gain curve of an optical amplifier according to this application;
FIG. 9 is a schematic diagram of a network scenario according to this application;
FIG. 10 is a flowchart of a gain adjustment method according to this application; and
FIG. 11 is a schematic diagram of a structure of a control apparatus according to this application.

## DESCRIPTION OF EMBODIMENTS

A device form and a service scenario described in embodiments of this application are intended to describe the technical solutions in embodiments of the present invention more clearly, but do not constitute a limitation on the technical solutions provided in embodiments of the present invention. A person of ordinary skill in the art may know that with evolution of a device form and emergence of a new service scenario, the technical solutions provided in embodiments of this application also apply to similar technical problems.

The technical solutions provided in this application are applicable to optical transmission scenarios, such as an optical backbone transmission network, a metro optical network, an optical access network, data center optical transmission, and wireless service fronthaul/backhaul. Specifically, the technical solutions set forth in this application may be used for optical amplifiers in the foregoing different networks.

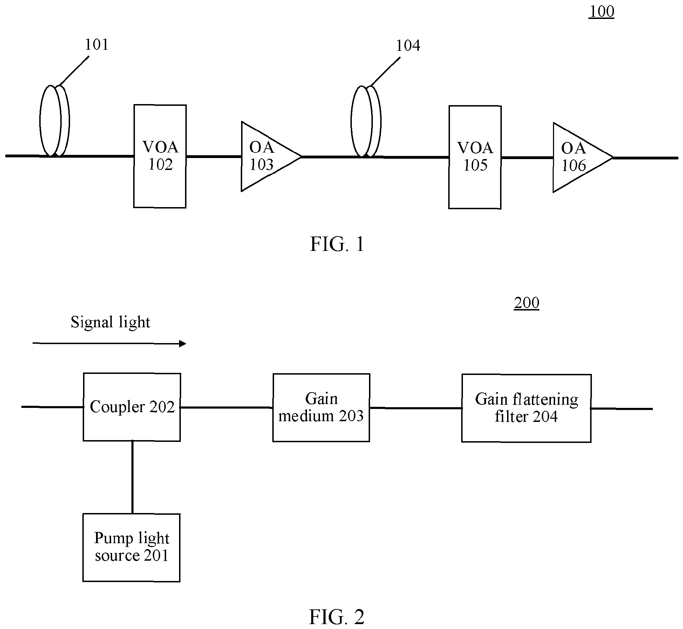

An optical amplifier may include a fixed gain amplifier and an adjustable gain amplifier. An optical amplifier with a fixed gain has a fixed gain. When a link loss changes, the optical amplifier cannot dynamically adjust the gain. Therefore, an external VOA needs to be used together to implement matching between the link loss and a gain of the optical amplifier. FIG. 1 is a schematic diagram of a network scenario in which an optical amplifier is applied. As shown in FIG. 1, it is assumed that a loss of a link 101 is 18 dB and a fixed gain of an OA 103 is 20 dB, a loss of a VOA 102 is adjusted to 2 dB, so that the loss of the link plus the loss of the VOA is consistent with the gain of the optical amplifier. A link 104, a VOA 105, and an OA 106 use similar configurations. In this manner, an extra link loss (that is, insertion loss) caused by the VOA is introduced, consequently system performance is greatly deteriorated. To improve the system performance, an optical amplifier with an adjustable gain may be used. However, in comparison with the optical amplifier with a fixed gain, an active component such as a VOA and a PD is added to a current optical amplifier with an adjustable gain, thereby increasing a volume and power consumption. In addition, because the VOA is added inside the optical amplifier, the optical amplifier is required to have high pump power to compensate for the extra insertion loss introduced by the VOA. At the same time, the optical amplifier with an adjustable gain has a multi-stage structure, and in comparison with an optical amplifier with a single-stage structure, a volume and costs are increased.

Therefore, this application provides an optical amplifier. When no VOA or PD is used inside the optical amplifier, the gain of the optical amplifier can be adjustable. FIG. 2 is a schematic diagram of a structure of a single-stage optical amplifier according to this application. As shown in FIG. 2, the optical amplifier 200 includes a pump light source 201, a coupler 202, a gain medium 203, and a gain flattening filter (GFF) 204. The pump light source 201 is configured to generate pump light. For example, the pump light source 201 may be implemented by a semiconductor laser of 980 nm or 1480 nm. The coupler 202 is configured to couple the pump light to the gain medium 203. The coupler 202 may be implemented by using an optical coupler, a wavelength division multiplexer, a multiplexer, or the like. For example, when a wavelength division multiplexer is used for implementation, the wavelength division multiplexer may perform wavelength division multiplexing on pump light and signal light, and transmit signal light and pump light after the wavelength division multiplexing to the gain medium 203. The signal light may come from a previous-stage network device of the optical amplifier, and is input to an input end of the optical amplifier. An arrow direction in the figure is an example transmission direction of the signal light. A structure of the optical amplifier 200 shown in FIG. 2 uses a forward pumping manner, to be specific, in the transmission direction of the signal light, the pump light source 201 is located before the gain medium 203. The optical amplifier in this application may alternatively use a backward pumping manner. The pump light source 201 and the coupler 202 are located between the gain medium 203 and the gain flattening filter 204. The forward pumping or the backward pumping may also be referred to as unidirectional pumping. The optical amplifier in this application may alternatively use a bidirectional pumping manner, to be specific, in the transmission direction of the signal light, the pump light source 201 is disposed before and after the gain medium 203.

The pump light can provide energy for the gain medium, and under action of the pump light, the gain medium is configured to amplify the signal light. For example, the gain medium 203 may be implemented by a rare earth doped fiber (such as an erbium-doped fiber and a thulium-doped fiber), a Raman fiber, a semiconductor, or the like. While amplifying the optical signal, the gain medium 203 may introduce a difference in the gain, so that power distribution between channels is unbalanced. Therefore, the gain flattening filter 204 may be used to correct a gain curve (or referred to as a gain spectrum) of the optical amplifier, so that the gain curve of the optical amplifier remains linear, and flatness of the gain curve is improved. The gain flattening filter 204 may be implemented by a plurality of types of filters, such as a thin film filter, a long cycle fiber grating filter, and a chirped fiber Bragg grating filter.

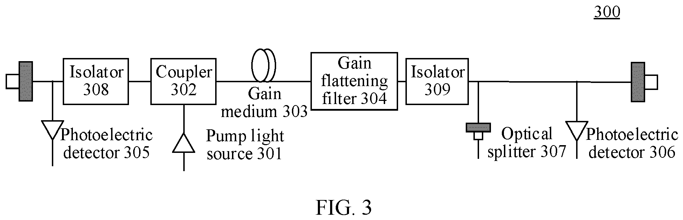

FIG. 3 is a schematic diagram of a structure of an optical amplifier according to this application. Based on FIG. 2, a gain medium 303 in FIG. 3 may be implemented by an erbium-doped fiber, and the optical amplifier 300 is referred to as an erbium-doped fiber amplifier. For functions of a pump light source 301, a coupler 302, a gain medium 303, and a gain flattening filter 304, refer to descriptions of an embodiment in FIG. 2. Details are not described herein again. Photoelectric detectors 305 and 306 may be respectively disposed at an input end and an output end of the erbium-doped fiber amplifier 300 shown in FIG. 3, to monitor input power and output power of signal light. An optical splitter 307 may also be disposed at the output end, to provide, through splitting, a part of the signal light for external monitoring. Isolators 308 and 309 may be further disposed in the optical amplifier to block reverse light (for example, reverse light generated by pump light leakage, end face surface reflection, or the like), to improve pumping efficiency and reduce a noise figure of the optical amplifier. For example, the isolator 308 is disposed between the photoelectric detector 305 and the coupler 302, and the isolator 309 is disposed between the gain flattening filter 304 and the optical splitter 307. For another example, the isolator 308 may alternatively be disposed between the coupler 302 and the gain medium 303, or the isolator 309 may alternatively be disposed between the gain medium 303 and the gain flattening filter 304.

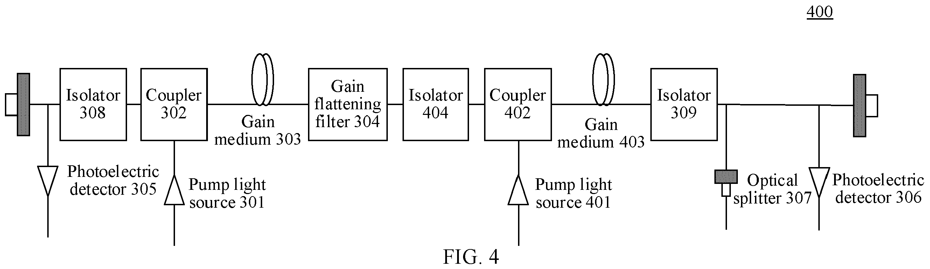

FIG. 4 is a schematic diagram of structure of a multi-stage optical amplifier according to this application. As shown in FIG. 4, a two-stage optical amplifier is used as an example for description. Based on FIG. 3, one stage of amplification is added in FIG. 4. For example, a pump light source 401, a coupler 402, a gain medium 403, and an isolator 404 are added. In another example, in FIG. 4, a gain flattening filter may be further added after the gain medium 403. A superposition principle similar to that in FIG. 4 is used, so that a multi-stage optical amplifier that has three or more stages may be implemented.

A structure of the optical amplifier shown in the foregoing embodiment is used as an example. In this application, an operating current of the pump light source can be adjusted, so that a gain of the optical amplifier is adjustable. A correspondence between the operating current of the pump light source and different gain values may be pre-calibrated and configured to be stored in a storage function module of the optical amplifier. Table 1 is an example gain calibration parameter table, and a gain range of an optical amplifier is 17 dB to 23 dB. Input optical power of the optical amplifier may be obtained according to the following formula:

$$\text{Pin} = \text{Poutmax} - \text{Gain} \qquad \text{Formula (1)}$$

Pin is the input optical power of the optical amplifier, and has a unit of dBm. Poutmax is the maximum output optical power of the optical amplifier, and has a unit of dBm. Poutmax is one of design parameters of the optical amplifier. Therefore, the parameter is known. Gain is an average gain value (or referred to as a gain value) of a wavelength of the optical amplifier, and has a unit of dB.

**Table 1 Gain calibration parameter table**

| Input optical power (dBm) | Gain (dB) | Operating current of a pump light source (mA) |
|---|---|---|
| 3.8 | 17 | $I_a$ |
| 2.8 | 18 | $I_b$ |
| 1.8 | 19 | $I_c$ |
| 0.8 | 20 | $I_d$ |
| -0.2 | 21 | $I_e$ |
| -1.2 | 22 | $I_f$ |
| -2.2 | 23 | $I_g$ |

An optical amplifier with a single pump light source (unidirectional pumping) is used as an example. The gain calibration parameter table may be obtained in the following manner. For any gain value Gain 1 in the gain range of 17 dB to 23 dB for the optical amplifier, input optical power Pin1 of the optical amplifier when the maximum output optical power Poutmax is reached under the gain value Gain 1 can be calculated according to Formula (1). The input optical power of the optical amplifier is set to Pin1. The operating current of the pump light source is adjusted, so that output optical power Pout1 of the optical amplifier reaches the maximum output optical power Poutmax. In this case, the operating current I1 of the pump light source is written into the gain calibration parameter table. For example, the maximum input optical power Poutmax of the optical amplifier is 20.8 dBm. When the gain value Gain 1 of the optical amplifier is 17 dB, the input optical power Pin1 of the optical amplifier is 3.8 dBm. The input optical power Pin1 of the optical amplifier is set to 3.8 dBm. The operating current of the pump light source is adjusted, so that the output optical power Pout1 of the optical amplifier is 20.8 dBm. In this case, the operating current of the pump light source is recorded as $I_a$.

Similarly, a plurality of gain values within the gain range may be traversed, and operating currents of pump light sources corresponding to different gain values may be calibrated. For example, in the gain range of 17 dB to 23 dB, seven gain values may be calibrated, or more or fewer gain values may be calibrated. If the optical amplifier has two pump light sources (bidirectional pumping), the gain calibration parameter table can be obtained in a manner of adjusting the operating currents (I1 and I2) of the two pump light sources. When the optical amplifier is working in a network, the gain of the optical amplifier can be adjusted in a manner of adjusting the operating current of the pump light source according to the gain calibration parameter table. In another example, the gain of the optical amplifier may alternatively be adjusted in a manner of adjusting power of the pump light source. In this case, a relationship between the gain and the power of the pump light source may be calibrated. The gain of the optical amplifier is adjusted through the operating current or power of the pump light source, so that a VOA in the optical amplifier and an intermediate-stage PD used to cooperate with the VOA for adjustment may be omitted, or a component such as a temperature control box of an erbium-doped fiber may be omitted. In a case of a plurality of pump light sources (bidirectional pumping or a multi-stage optical amplifier), the foregoing gain calibration parameter table may be calibrated in a manner of adjusting an operating current of one or more pump light sources.

In another implementation, the gain of the optical amplifier may be adjustable in a manner of retaining a VOA inside the optical amplifier. In this manner, the gain of the optical amplifier may be adjusted jointly through the VOA and the pump light source. In this manner, the temperature control box of the erbium-doped fiber may be omitted.

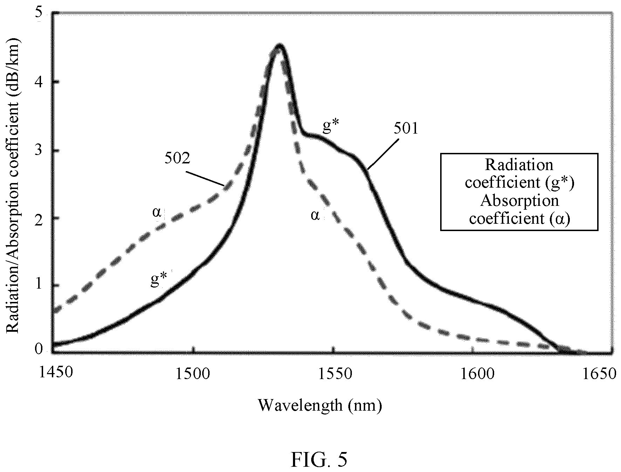

Because a gain medium such as an erbium-doped fiber has a better radiation coefficient (g*) and absorption coefficient ($\alpha$) in C-band, the gain medium is widely used for amplification of an optical signal in C-band. FIG. 5 is a schematic diagram of curves of radiation coefficients and absorption coefficients on different wavelengths of an erbium-doped fiber according to this application. As shown in FIG. 5, a radiation coefficient curve 501 and an absorption coefficient curve 502 of a gain medium such as an erbium-doped fiber have unflatness on different wavelengths. As a result, a gain spectrum of an optical amplifier also has unflatness on different wavelengths. Therefore, an additional optical component is needed for compensation of gain spectral flatness of the optical amplifier. For example, a gain flattening filter is used to implement this function. The gain flattening filter may include a fixed GFF and a dynamic GFF. The fixed GFF implements fixed compensation of the gain spectrum flatness of the optical amplifier. The dynamic GFF can be adjusted in real time through an external control signal, to implement dynamic compensation of the gain spectrum flatness of the optical amplifier.

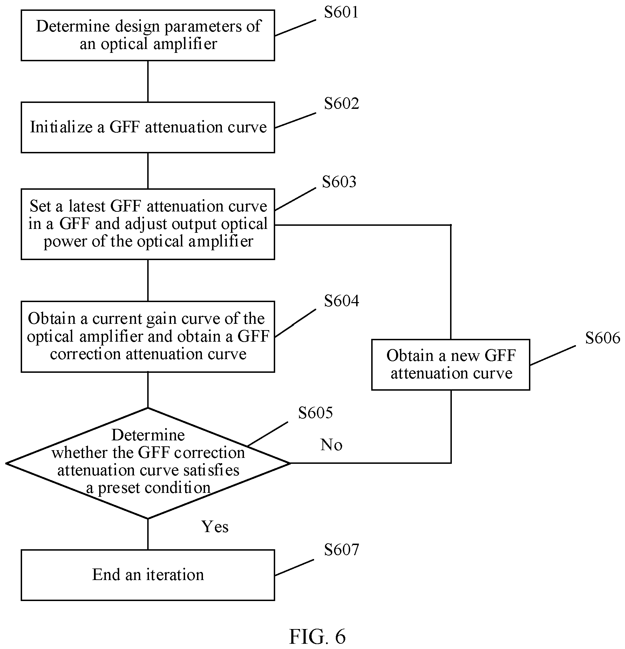

The gain flattening filter may be implemented by using a thin film filter. The thin film filter is an optical coating component, and can control coating parameters on different wavelengths to implement different attenuation of optical signals on different wavelengths. Therefore, an attenuation curve of the gain flattening filter is designed, so that the gain spectrum of the optical amplifier can be flattened. FIG. 6 is an example flowchart of a method for designing an attenuation curve of a gain flattening filter according to this application. A fixed GFF is used as an example. A method for designing a GFF attenuation curve may include the following steps.

S601: Determine design parameters of an optical amplifier.

The design parameters of the optical amplifier may include a gain range, a target gain curve, a maximum output optical power Poutmax, a wavelength range, and the like of the optical amplifier. The design parameters may further include parameters related to an optical path design, for example, a type of each component inside the optical amplifier, an insertion loss, and a length of an erbium-doped fiber. The gain range of the optical amplifier may include a highest gain value and a lowest gain value. Components in the optical amplifier may include a coupler, a pump light source, a gain medium, a gain flattening filter, and the like.

The target gain curve may be determined in the following manner. A reference point Gain_Base for design of the optical amplifier is first determined, and then a target gain curve of the optical amplifier is determined based on the reference point Gain_Base. The reference point Gain_Base may be an average gain value of the optical amplifier or a network average span loss (span loss) value. A gain value of the target gain curve may be the reference point Gain_Base. For example, the gain value of the target gain curve is an average gain value of an optical amplifier, or is a network average span loss value of a network in which the optical amplifier is located. In addition, the target gain curve may further have a specific slope based on a performance requirement of the network.

The average gain value of the optical amplifier may be a median value within the gain range of the optical amplifier, or an average value or a weighted average value, or the like within the gain range of the optical amplifier. The average gain value of the optical amplifier can reflect average distribution of the gain range. For example, if the gain range of the optical amplifier is 17 dB to 23 dB, the reference point Gain_Base is 20 dB. The network average span loss value may be a weighted average value of losses of a plurality of single-span links in the network in which the optical amplifier is located. A single-span link loss is a total link loss between an output of a previous-stage optical amplifier and an input of a next-level optical amplifier, and may include a fiber loss, an optical component loss, and the like. A network range in which the optical amplifier is located may be determined based on a requirement of a customer or determined based on a transmission distance of an optical signal. For example, in the network range in which the optical amplifier is located, an optical signal generated by any device may directly reach another device in the network range without performing optical-to-electrical conversion. The network average span loss value and the gain range of the optical amplifier may be numerically the same. The gain value or the single-span link loss of the optical amplifier may be in an equal probability distribution, or may be in an unequal probability distribution. For example, the gain range of the optical amplifier is 17 dB to 23 dB, and in a case of equal probability distribution, the average gain value of the optical amplifier is 20 dB. If the gain value of the optical amplifier is in an unequal probability distribution, for example, a probability of occurrence of 18 dB is P18 = 20%, a probability of occurrence of 19 dB is P19 = 25%, a probability of occurrence of 20 dB is P20 = 20%, a probability of occurrence of 21 dB is P21 = 20%, a probability of occurrence of 22 dB is P22 = 5%, a probability of occurrence of 23 dB is P23 = 5%, and a probability of occurrence of 24 dB is P24 = 5%, the average gain value of the optical amplifier is 18 dB x 20% + 19 dB x 25% + 20 dB x 20% + 21 dB x 20% + 22 dB x 5% + 23 dB x 5% + 24 dB x 5% = 20 dB. For another example, a loss range of each single-span link is 17 dB to 23 dB (it is assumed that a loss range of each single-span link is the same), and in a case of equal probability distribution, the network average span loss value is 20 dB. If losses of the plurality of single-span links included in the network are in an unequal probability distribution (it is assumed that a loss probability distribution of each single-span link is the same), for example, the probability of occurrence of 18 dB is P18 = 20%, the probability of occurrence of 19 dB is P19 = 25%, the probability of occurrence of 20 dB is P20 = 20%, the probability of occurrence of 21 dB is P21 = 20%, the probability of occurrence of 22 dB is P22 = 5%, the probability of occurrence of 23 dB is P23 = 5%, and the probability of occurrence of 24 dB is P24 = 5%, the network average span loss value is 18 dB x 20% + 19 dB x 25% + 20 dB x 20% + 21 dB x 20% + 22 dB x 5% + 23 dB x 5% + 24 dB x 5% = 20 dB.

S602: Initialize the GFF attenuation curve.

An initial value of the GFF attenuation curve may be randomly selected. For example, an inherent insertion loss of the GFF may be used as the initial value.

S603: Set a latest GFF attenuation curve in the GFF and adjust output optical power of the optical amplifier.

In a first iteration, the latest GFF attenuation curve is the initialized attenuation curve in S602. In subsequent iterations, the latest GFF attenuation curve is a new attenuation curve obtained in S606 below. When the optical amplifier is in a state of the target gain curve (the gain value is Gain_Base), input optical power Pin of the optical amplifier is obtained according to Formula (1), that is, Pin = Poutmax - Gain Base. In the first iteration, the input optical power Pin of the optical amplifier is set to Poutmax - Gain Base, and the output optical power of the optical amplifier is adjusted to the maximum output optical power Poutmax in a manner of adjusting an operating current or power of the pump light source. In subsequent iterations, after the latest GFF attenuation curve is set, a value of the input optical power Pin may not be changed, and the output optical power of the optical amplifier may be directly adjusted to the maximum output optical power Poutmax in a manner of adjusting the operating current or power of the pump light source.

S604: Obtain a current gain curve of the optical amplifier and obtain a GFF correction attenuation curve.

The GFF correction attenuation curve may be obtained in a manner of calculating a difference between the current gain curve of the optical amplifier and the target gain curve. The GFF attenuation curve is gradually corrected by the GFF correction attenuation curve generated in a plurality of iterations, so that the current gain curve of the optical amplifier gradually approaches the target gain curve. In this application, because the operating current or power of the pump light source is used to adjust a gain of the optical amplifier, one or more of the following components may be omitted: a VOA, an intermediate-stage PD, and a temperature control box of the erbium-doped fiber. However, omitting the VOA and the intermediate-stage PD distorts gain curves corresponding to different gain points, and omitting the temperature control box of the erbium-doped fiber distorts gain curves corresponding to different temperatures. Therefore, in this application, the GFF attenuation curve is designed based on a target gain curve in which the gain value is the foregoing reference point Gain_Base.

S605: Determine whether the GFF correction attenuation curve satisfies a preset condition.

The preset condition may be that the GFF correction attenuation curve is 0 or less than a preset threshold. When the GFF correction attenuation curve satisfies the preset condition, it indicates that a current GFF attenuation curve satisfies a design requirement, and S607 can be performed. When the GFF correction attenuation curve does not satisfy the preset condition, it indicates that the current GFF attenuation curve does not satisfy the design requirement, and S606 needs to be performed, to perform a new round of iterations.

S606: Obtain a new GFF attenuation curve.

New GFF attenuation curve = Current GFF attenuation curve + GFF correction attenuation curve - min (current GFF attenuation curve + GFF correction attenuation curve). For the min (current GFF attenuation curve + GFF correction attenuation curve) herein, a curve obtained by addition calculation in brackets is a wavelength-related attenuation curve, and min refers to a lowest attenuation value on the attenuation curve. Subtracting the smallest value may enable the lowest attenuation value of the new GFF attenuation curve to be 0, to ensure that an internal loss of the optical amplifier is the lowest. After the new GFF attenuation curve is obtained, S603 is performed.

S607: End the iteration.

After the iteration is ended, the latest GFF attenuation curve is obtained as the GFF attenuation curve used by the optical amplifier. The GFF attenuation curve used by the optical amplifier is designed based on the target gain curve. In other words, the GFF attenuation curve used by the optical amplifier matches the target gain curve. It may be understood that the GFF attenuation curve used by the optical amplifier can enable a gain curve of the optical amplifier at the reference point to roughly or completely coincide with the target gain curve.

The following describes an iteration process of the GFF attenuation curve with reference to a specific example.

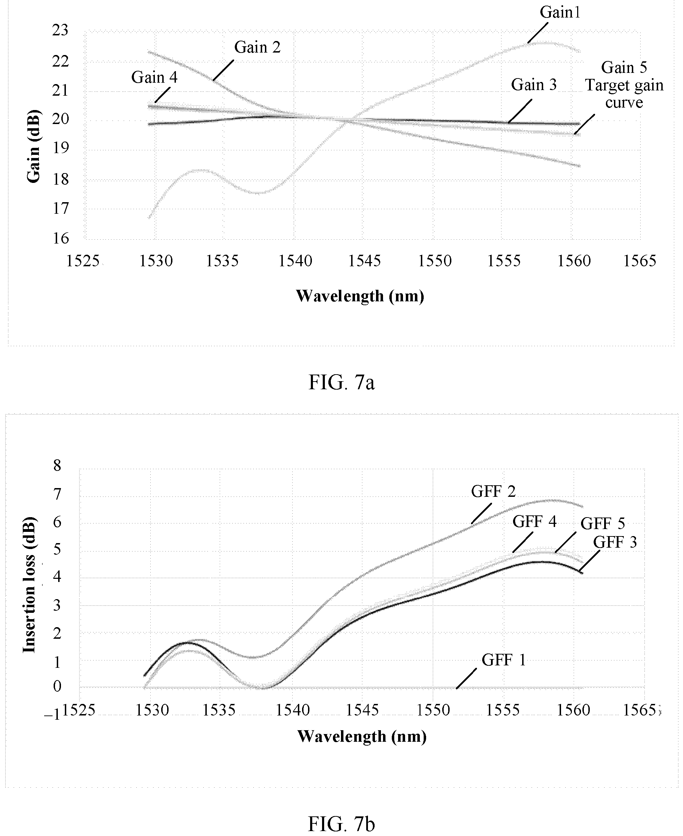

FIG. 7a is a schematic diagram of an iteration of a gain curve according to this application. FIG. 7a shows five gain curves generated in the iteration process: Gain 1, Gain 2, Gain 3, Gain 4, and Gain 5. FIG. 7a also shows a target gain curve for design of an optical amplifier. Gain 5 is a gain curve finally obtained after the iteration is ended. Therefore, Gain 5 is used as a gain curve corresponding to the reference point (20 dB in the figure) used by the optical amplifier. Gain 5 may also be referred to as a target gain curve actually used by the optical amplifier. As shown in the figure, Gain 5 roughly coincides with the designed target gain curve. The two curves may be collectively referred to as the target gain curve.

FIG. 7b is a schematic diagram of an iteration of a GFF attenuation curve according to this application. FIG. 7b shows five GFF attenuation curves generated in the iteration process: GFF 1, GFF 2, GFF 3, GFF 4, and GFF 5. An insertion loss value (or referred to as an attenuation value) of an initial attenuation curve GFF 1 of a GFF is 0 dB, and a GFF attenuation curve used by the optical amplifier is GFF 5.

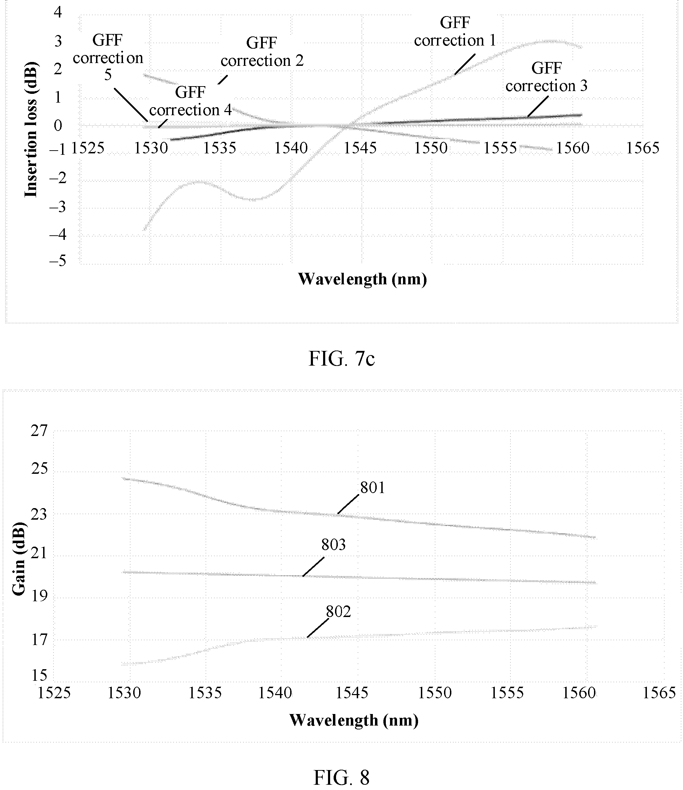

FIG. 7c is a schematic diagram of an iteration of a GFF correction attenuation curve according to this application. FIG. 7c shows five GFF correction attenuation curves generated in the iteration process: GFF correction 1, GFF correction 2, GFF correction 3, GFF correction 4, and GFF correction 5. The GFF correction curve generated in a plurality of iterations in FIG. 7c may gradually correct the GFF attenuation curve in FIG. 7b, so that the gain curve in FIG. 7a gradually approaches the target gain curve.

With reference to FIG. 7a to FIG. 7c, a design process of an iteration of a GFF attenuation curve is described in this application. In the first iteration, the GFF attenuation curve is set to GFF 1, and the GFF correction attenuation curve GFF correction 1 is obtained in a manner of calculating a difference between the gain curve Gain 1 and the target gain curve. The GFF correction 1 does not satisfy the preset condition. Therefore, a new GFF attenuation curve GFF 2 is obtained based on the current GFF attenuation curve GFF 1 and the GFF correction attenuation curve GFF correction 1. Similarly, in the second iteration, a gain curve Gain 2 is generated based on the GFF attenuation curve GFF 2, and the GFF correction attenuation curve GFF correction 2 is obtained, to obtain a new GFF attenuation curve GFF 3. By analogy, until the GFF correction attenuation curve satisfies the preset condition, the iteration process may be ended, and a final GFF attenuation curve is obtained. A quantity of iterations is not limited in this application. Usually, a larger quantity of iterations indicates better performance of an obtained GFF attenuation curve.

In the design method of the GFF attenuation curve in this application, the gain curve of the optical amplifier may be symmetrically distributed relative to the target gain curve (or a gain curve in which the gain value is the reference point). The reference point is used as the gain value of the target gain curve, and may be the average gain value of the optical amplifier or the network average span loss value mentioned in the foregoing embodiment. Within the gain range of the optical amplifier, a gain curve corresponding to any two gain values with an equal difference (or symmetry) relative to the reference point is symmetric relative to a target gain curve.

FIG. 8 is a schematic diagram of a gain curve of an optical amplifier according to this application. As shown in FIG. 8, a gain range of the optical amplifier is 17 dB to 23 dB, and a gain is adjustable. The figure shows a highest gain curve 801, a lowest gain curve 802, and a target gain curve 803 of the optical amplifier. A reference point Gain_Base is 20 dB. The target gain curve of 20 dB has a gain slope of 1 dB. 17 dB and 23 dB are two gain values symmetric relative to 20 dB within the gain range. Therefore, the gain curves of 17 dB and 23 dB are symmetric relative to the target gain curve of 20 dB. Similarly, gain curves of 19 dB and 21 dB (not shown in the figure) are symmetric relative to the target gain curve of 20 dB. Flatness or distortion states of gain curves corresponding to different gain values may also be different. To be specific, the flatness or distortion states of the gain curves vary with a gain value of the optical amplifier. In addition, distortion states of gain curves corresponding to two symmetric gain values are opposite. For example, the gain curve of 17 dB decreases in a wavelength range of 1530 nm to 1560 nm, and the gain curve of 23 dB increases in the wavelength range of 1530 nm to 1560 nm. It can be learned that flatness or distortion states of the gain curve of 17 dB and the gain curve of 23 dB are different. In addition, the distortion states of the gain curve of 17 dB and the gain curve of 23 dB are opposite. In this way, if one optical amplifier is set to have the gain curve of 17 dB and another optical amplifier is set to have the gain curve of 23 dB, distortions generated by the gain curves of the two optical amplifiers can be mutually canceled out.

For an optical amplifier with an adjustable gain, currently, a highest or lowest gain value is usually used as a design reference point of a GFF attenuation curve. According to the optical amplifier provided in this application, an average gain value or a network average span loss value of the optical amplifier is used as a design reference point of the GFF attenuation curve, and the gain curves are symmetrically distributed, so that distortions of the gain curves can be effectively compensated for, and flatness of the gain curve can be improved. The reference point (the gain value of the target gain curve) in this application may be approximately equal to, but is not necessarily strictly equal to, an average gain value or a network average span loss value of the optical amplifier. "Symmetric" described in this application is not necessarily strictly symmetric. For example, the gain curve may be approximately symmetric relative to the target gain curve. Gain curves are symmetrically designed, so that distortions generated by gain curves corresponding to different gain values can be compensated for when a VOA and an intermediate-stage PD in the optical amplifier are omitted. The gain curves are symmetrically designed, distortions of gain curves corresponding to different operating temperatures can be further compensated for when a temperature control box of an erbium-doped fiber is omitted.

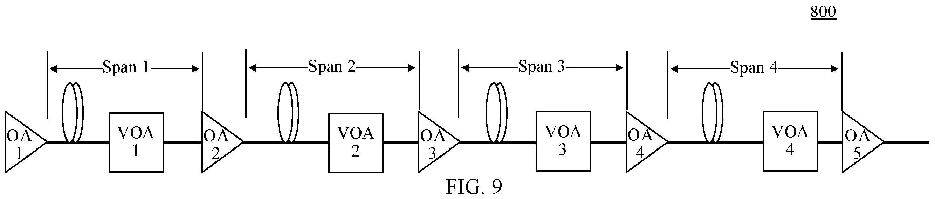

FIG. 9 is a schematic diagram of a network scenario according to this application. The optical amplifier in the foregoing embodiment of this application may be applied to a network scenario with a plurality of spans. As shown in FIG. 9, a network 900 includes a plurality of optical amplifiers (OA 1 to OA 5) and VOAs (VOA 1 to VOA 4) on a link. A link between an output of a previous-stage optical amplifier and an input of a lower-level optical amplifier may form a span. The link described herein may include an optical component such as an optical fiber or a VOA. For example, a link between an output of the OA 1 and an input of the OA 2 may be considered as a span 1, a link between an output of the OA 2 and an input of the OA 3 may be considered as a span 2, a link between an output of the OA 3 and an input of the OA 4 may be considered as a span 3, and a link between an output of the OA 4 and an input of the OA 5 may be considered as a span 4. Transmission of an optical signal on a link is affected by a link loss. As a result, the signal is weakened and transmission quality is affected. Optical amplifiers are configured to amplify the optical signal and compensate for the link loss. Because gain flatness of the optical amplifiers varies with different gain values, a VOA located outside the optical amplifier on the link is configured to cooperate with a downstream adjacent optical amplifier of the VOA to perform gain adjustment, thereby improving the gain flatness. For example, when the optical signal passes through the span 1, a single-span link loss of 18 dB is generated. The OA 1 may amplify the optical signal, and the VOA 1 is configured to cooperate with the OA 1 to perform gain adjustment.

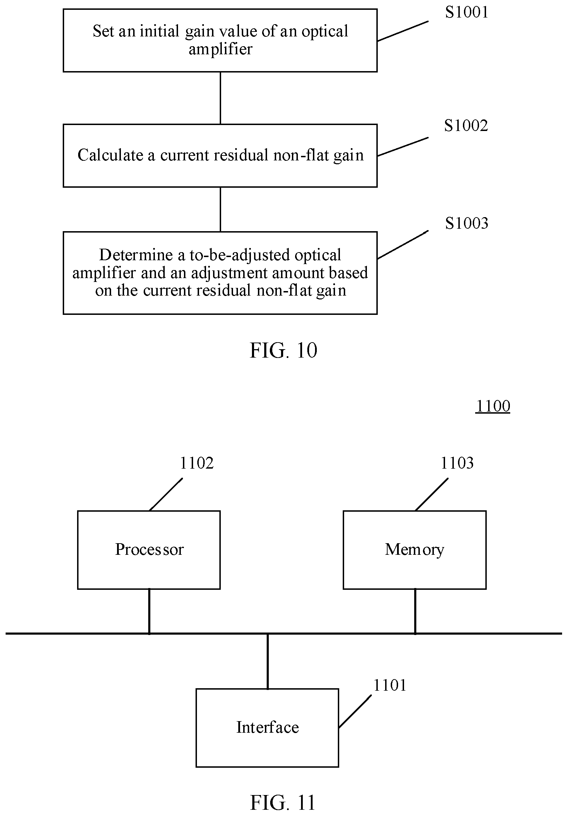

FIG. 10 is a flowchart of a gain adjustment method according to this application. The method may be implemented by a control apparatus of an optical amplifier. For example, the method may be implemented by controlling an optical amplifier by a network management system, a network controller, or a control board on a network element. As shown in FIG. 10, the method may include the following steps.

S1001: Set an initial gain value of the optical amplifier.

The initial gain value of the optical amplifier may be configured through the network management system, the network controller, the control board, or the like. For example, the initial gain value of the optical amplifier may be a single-span link loss between an output of a previous-stage optical amplifier and an input of the optical amplifier.

S1002: Calculate a current residual non-flat gain.

The network management system, the network controller, and the control board may obtain a current gain value of each optical amplifier and a reference point for design of the optical amplifier, and calculate the current residual non-flat gain. The residual non-flat gain can be calculated according to the following formula:

$$\text{Residual non-flat gain} = \sum (\text{Gain\_I} - \text{Gain\_Base}), \text{I} \in [1...\text{N}] \quad \text{Formula (2)}$$

Gain I is a current gain value of an $\text{I}^{\text{th}}$ optical amplifier, Gain_Base is the reference point for design of the optical amplifier, and N is a quantity of to-be-adjusted optical amplifiers. The reference point Gain_Base may be the average gain value of the optical amplifier or the network average span loss value mentioned in the foregoing embodiment.

The residual non-flat gain indicates a difference between a current gain value of the to-be-adjusted optical amplifier and the reference point. When there are a plurality of to-be-adjusted optical amplifiers, the residual non-flat gain indicates a sum of differences between current gains of the optical amplifiers and the reference point.

S1003: Determine the to-be-adjusted optical amplifier and an adjustment amount based on the current residual non-flat gain.

The network management system, the network controller, the control board, or the like may determine whether to adjust a gain based on the current residual non-flat gain calculated in S1002. A value of the residual non-flat gain may be positive or negative. If an absolute value of the residual non-flat gain is relatively large, it indicates that network performance is relatively poor, and gain adjustment needs to be performed. Conversely, when the absolute value of the residual non-flat gain is relatively small, the network performance is relatively good, and gain adjustment may not be performed. For example, a minimum absolute value of the residual non-flat gain may be zero. If gain adjustment needs to be performed, which optical amplifier is to perform gain adjustment and a specific adjustment amount are further determined.

In one case, if the absolute value of the residual non-flat gain is less than or equal to an adjustment threshold, no optical amplifier may perform gain adjustment. For example, the adjustment threshold is set to zero, and when the absolute value of the residual non-flat gain is equal to zero, no optical amplifier performs gain adjustment.

In another case, if the absolute value of the residual non-flat gain is greater than the adjustment threshold, gain adjustment may be performed on one or more optical amplifiers. For example, the adjustment threshold is set to zero, and when the absolute value of the residual non-flat gain is greater than zero (in other words, is not equal to zero), gain adjustment may be performed on one or more optical amplifiers.

In another example, when the adjustment threshold is not zero and the absolute value of the residual non-flat gain is equal to the adjustment threshold, the gain adjustment may also be performed. To be specific, when the absolute value of the residual non-flat gain is less than the adjustment threshold, the gain adjustment is not performed. When the absolute value of the residual non-flat gain is greater than or equal to the adjustment threshold, the gain adjustment is performed.

When the gain adjustment needs to be performed (where the absolute value of the residual non-flat gain is greater than the adjustment threshold, or greater than or equal to the adjustment threshold), if the residual non-flat gain is less than zero, it is determined that the to-be-adjusted optical amplifier is an optical amplifier with a lowest gain value, or that a single-span link loss value of an upstream span in which the to-be-adjusted optical amplifier is located is the smallest. A gain of the to-be-adjusted optical amplifier may be increased by x dB, and at the same time, attenuation of the upstream span in which the to-be-adjusted optical amplifier is located is increased by x dB. S 1002 and S1003 are repeated until the absolute value of the residual non-flat gain is less than or equal to the adjustment threshold, or is less than the adjustment threshold.

When the gain adjustment needs to be performed, if the residual non-flat gain is greater than zero, it is determined that the to-be-adjusted optical amplifier is an optical amplifier with a highest gain value, or that the single-span link loss value of the upstream span in which the to-be-adjusted optical amplifier is located is the largest. The gain of the to-be-adjusted optical amplifier may be decreased by x dB, and at the same time, the attenuation of the upstream span in which the to-be-adjusted optical amplifier is located is decreased by x dB. If the single-span link loss of the upstream span in which the to-be-adjusted optical amplifier is located cannot be reduced, other spans may be selected in descending order of single-span link loss values for attenuation adjustment. S1002 and S1003 are repeated until the absolute value of the residual non-flat gain is less than or equal to the adjustment threshold, or is less than the adjustment threshold.

In this embodiment of this application, gain adjustment (increase or decrease) of the optical amplifier may be controlled through an operating current or a voltage of a pump light source. Attenuation of a span can be adjusted (increased or decreased) through a VOA on a link or a multiplexer/demultiplexer with adjustable attenuation.

An optical amplifier corresponding to adjustment of the lowest gain (the smallest loss value) or the highest gain (the largest loss) described in this application is a specific example. In another example, an optical amplifier corresponding to a second smallest or second largest gain or loss value may be selected as a to-be-adjusted optical amplifier. When there are a plurality of to-be-adjusted optical amplifiers, gains of the plurality of optical amplifiers may be adjusted simultaneously, and a sum of adjustment amounts of the plurality of optical amplifiers is a single adjustment amount x dB.

The single adjustment amount x dB may be set randomly, or may be set based on parameters such as residual gain unflatness or an adjustment threshold. For example, if the residual gain flatness is small, a small single adjustment amount can be set, and vice versa. If the adjustment threshold is small, a small single adjustment amount can be set, and vice versa. The single adjustment amount may also be changed during an adjustment process. For example, a larger adjustment amount is used for coarse adjustment, and then a smaller adjustment amount is used for fine adjustment.

The gain adjustment method in this application is described by using the network scenario shown in FIG. 9 as an example. Table 2 is an example of gain adjustment of an optical amplifier.

**Table 2 Example of gain adjustment of an optical amplifier**

|  | OA1 | OA2 | OA3 | OA4 |
|---|---|---|---|---|
| Initial gain value | Gain 1 = 18 dB | Gain 2 = 22 dB | Gain 3 = 19 dB | Gain 4 = 19 dB |
| First adjustment | **Gain 1 = 18.5 dB** | Gain 2 = 22 dB | Gain 3 = 19 dB | Gain 4 = 19 dB |
| Second adjustment | **Gain 1 = 19 dB** | Gain 2 = 22 dB | Gain 3 = 19 dB | Gain 4 = 19 dB |
| Third adjustment | **Gain 1 = 19.5 dB** | Gain 2 = 22 dB | Gain 3 = 19 dB | Gain 4 = 19 dB |
| Fourth adjustment | Gain 1 = 19.5 dB | Gain 2 = 22 dB | **Gain 3 = 19.5 dB** | Gain 4 = 19 dB |

It is assumed that optical amplifiers OA 1 to OA 4 are optical amplifiers with adjustable gains, designed reference points Gain_Base of OA 1 to OA 4 are all 20 dB, and gain ranges of OA 1 to OA 4 are all 18 dB to 24 dB. The adjustment threshold is set to 0 dB, and the single adjustment amount is 0.5 dB. An initial gain value of the OA 1 is set to a single-span link loss Loss 1 of a span 1, that is, 18 dB. An initial gain value of the OA 2 is set to a single-span link loss Loss 2 of a span 2, that is, 22 dB. An initial gain value of the OA 3 is set to a single-span link loss Loss 3 of a span 3, that is, 19 dB. An initial gain value of the OA 4 is set to a single-span link loss Loss 4 of a span 4, that is, 19 dB. When the initial gain value of the optical amplifier is used, the residual non-flat gain is (18 - 20) + (22 - 20) + (19 - 20) + (19 - 20) = -2 dB. If the residual non-flat gain is less than 0 and the absolute value of the residual non-flat gain is greater than the adjustment threshold, the first adjustment is performed. The gain value Gain 1 of OA 1 with the lowest gain value is increased by 0.5 dB, that is, the gain value is adjusted to 18.5 dB, and the attenuation of VOA 1 is adjusted to be increased by 0.5 dB. After the first adjustment, the current residual non-flat gain is -1.5 dB. In this case, the gain value of the OA 1 is still the lowest. The gain of the OA 1 is continually increased by 0.5 dB, that is, the gain of the OA 1 is adjusted to 19 dB, and at the same time, the attenuation of the VOA 1 is adjusted to be increased by 0.5 dB. Similarly, the gain Gain 1 of the OA 1 is adjusted to 19.5 dB in the third adjustment, and the gain Gain 3 of the OA 3 is adjusted to 19.5 dB in the fourth adjustment. In the fourth adjustment, the gain value Gain 1 of the OA 1, the gain value Gain 3 of the OA 3, and the gain value Gain 4 of the OA 4 are lower than the reference point, and may be referred to as "low gains". The gain value Gain 2 of the OA 2 is higher than the reference point, and may be referred to as a "high gain". A difference (+2) between the high gain and the reference point cancels out a difference (-2) between the low gain and the reference point. Therefore, the residual gain unflatness is adjusted to zero, thereby improving end-to-end network performance of the link.

A gain curve of an optical amplifier provided in this application is symmetrically distributed relative to a target gain curve, and distortions of gain curves of two symmetric gain values are just opposite. Therefore, according to the gain adjustment method in this application, distortions of gain curves of an optical amplifier with a high gain and an optical amplifier with a low gain can be mutually canceled out, thereby optimizing power flatness and network performance of optical signals on different wavelengths.

FIG. 11 is a schematic diagram of a structure of a control apparatus according to this application. As shown in FIG. 11, the control apparatus 1100 includes an interface 1101 and a processor 1102. The control apparatus 1100 may be a network management system, a network controller, or a control board, and is configured to perform the method shown in FIG. 10 to control an optical amplifier. In some cases, the control apparatus 1100 may further include a memory 1103. The memory 1103 may be disposed inside the control apparatus 1100, or disposed outside the control apparatus 1100.

Specifically, the processor 1102 may be a central processing unit (CPU), a network processor (NP), or a combination of the CPU and the NP. The processor 1102 may further include a hardware chip. The foregoing hardware chip may be an application-specific integrated circuit (ASIC), a programmable logic device (PLD), or a combination thereof. The PLD may be a complex programmable logic device (CPLD), a field-programmable gate array (FPGA), a generic array logic (GAL), or any combination thereof.

The interface 1101, the processor 1102, and the memory 1103 are connected to each other. For example, the interface 1101, the processor 1102, and the memory 1103 may be connected to each other through a bus. The bus may be a peripheral component interconnect standard (PCI) bus, an extended industry standard architecture (EISA) bus, or the like.

In an implementation, the memory 1103 is configured to store instructions, a program, or the like. The memory 1103 may include a random-access memory (RAM), or may further include a non-volatile memory, for example, one or more magnetic disk memories. The processor 1502 executes the instructions or the program stored in the memory 1503, to implement the function of the foregoing embodiment. In some cases, the instructions or program may be directly fixed into a digital circuit, and in this case, the instructions or program may not be saved.

For example, when the control apparatus 1100 is configured to implement the gain adjustment method in the embodiment in FIG. 10, the interface 1101 may send gain configuration information to the optical amplifier, to adjust or set a gain value of the optical amplifier. In addition to storing instructions or a program, the memory 1103 may further store a gain calibration parameter table shown in Table 1, or the like. The processor 1502 may calculate a residual non-flat gain, determine a to-be-adjusted optical amplifier, an adjustment amount, and the like. For related specific descriptions, refer to related descriptions in the embodiment shown in FIG. 11. Details are not described herein again.

The foregoing descriptions are merely specific implementations of this application, but the protection scope of this application is not limited thereto. Any variation or replacement readily figured out by a person skilled in the art within the technical scope disclosed in this application shall fall within the protection scope of this application. Therefore, the protection scope of this application shall be subject to the protection scope of the claims.

**Claims**

1. An optical amplifier, comprising a pump light source, a coupler, a gain medium, and a gain flattening filter, wherein a gain curve of the optical amplifier is symmetric relative to a target gain curve, and distortion states of any two symmetric gain curves are opposite;

   the pump light source is configured to provide pump light;
   the coupler is configured to couple the pump light to the gain medium;
   the gain medium is configured to amplify, based on the pump light, signal light input to the optical amplifier; and
   the gain flattening filter is configured to filter the amplified signal light, and output the filtered signal light.

2. The optical amplifier according to claim 1, wherein a gain value of the target gain curve is an average gain value of the optical amplifier or a network average span loss value of a network in which the optical amplifier is located.

3. The optical amplifier according to claim 1 or 2, wherein the pump light source is further configured to adjust a gain value of the optical amplifier.

4. The optical amplifier according to claim 3, wherein the gain value of the optical amplifier varies with an operating current or power of the pump light source.

5. The optical amplifier according to any one of claims 1 to 4, wherein an attenuation curve of the gain flattening filter is designed based on the target gain curve.

6. The optical amplifier according to any one of claims 1 to 5, wherein the optical amplifier is a single-stage optical amplifier.

7. The optical amplifier according to any one of claims 1 to 6, wherein the optical amplifier further comprises an isolator, and the isolator is configured to control a transmission direction of the signal light.

8. An optical network system, comprising a plurality of the optical amplifiers according to any one of claims 1 to 6.

9. The system according to claim 8, wherein the plurality of optical amplifiers comprise a first optical amplifier and a second optical amplifier, the first optical amplifier is set to have a first gain value, the second optical amplifier is set to have a second gain value, and distortion states of a gain curve corresponding to the first gain value and a gain curve corresponding to the second gain value are opposite.

10. An optical signal amplification method, applied to an optical amplifier, wherein the method comprises:

providing pump light;
coupling the pump light to a gain medium;
amplifying, based on the pump light, signal light input to the optical amplifier, wherein a gain curve of the optical amplifier is symmetric relative to a target gain curve, and distortion states of any two symmetric gain curves are opposite; and
filtering the amplified signal light, and outputting the filtered signal light.

11. The method according to claim 10, wherein a gain value of the target gain curve is an average gain value of the optical amplifier or a network average span loss value of a network in which the optical amplifier is located.

12. The method according to claim 10 or 11, wherein the method further comprises:
adjusting a gain value of the optical amplifier.

13. The method according to claim 12, wherein the gain value of the optical amplifier varies with an operating current or power of a pump light source in the optical amplifier.

14. The method according to any one of claims 10 to 13, wherein the optical amplifier is a single-stage optical amplifier.

15. The method according to any one of claims 10 to 14, wherein the method further comprises:
controlling a transmission direction of the signal light.

16. A gain adjustment method of an optical amplifier, applied to the optical network system according to claim 8, wherein the plurality of optical amplifiers comprise a first optical amplifier and a second optical amplifier, and the method comprises:
setting the first optical amplifier to have a first gain value, and setting the second optical amplifier to have a second gain value, wherein distortion states of a gain curve corresponding to the first gain value and a gain curve corresponding to the second gain value are opposite.

17. The method according to claim 16, wherein the method comprises:

determining a residual non-flat gain of the optical network system, wherein the residual non-flat gain is obtained based on gain values of the plurality of optical amplifiers and a gain value of the target gain curve; and
determining, based on the residual non-flat gain, whether gain adjustment needs to be performed on at least one of the plurality of optical amplifiers.

18. The method according to claim 17, wherein the method comprises:
when an absolute value of the residual non-flat gain is greater than or equal to a preset adjustment threshold, determining that the gain adjustment needs to be performed on at least one of the plurality of optical amplifiers.

19. The method according to claim 17, wherein the method comprises:
when the residual non-flat gain is not equal to zero, determining that the gain adjustment needs to be performed on at least one of the plurality of optical amplifiers.

20. The method according to any one of claims 17 to 19, wherein the method comprises:
determining a to-be-adjusted optical amplifier, wherein the to-be-adjusted optical amplifier has a highest gain or a lowest gain, or a single-span link loss value of an upstream span in which the to-be-adjusted optical amplifier is located is the largest or the smallest.

21. The method according to claim 20, wherein when the residual non-flat gain is greater than zero, the to-be-adjusted optical amplifier has the highest gain, or the single-span link loss value of the upstream span in which the to-be-adjusted optical amplifier is located is the largest.

22. The method according to claim 20, wherein when the residual non-flat gain is less than zero, the to-be-adjusted optical amplifier has the lowest gain, or the single-span link loss value of the upstream span in which the to-be-adjusted optical amplifier is located is the smallest.

23. A control apparatus, wherein a controller comprises a processor and an interface, wherein

the interface is configured to communicate with a plurality of optical amplifiers; and
the processor is configured to execute instructions, to perform the method according to any one of claims 16 to 22.

100

101      104

| VOA 102 | | OA 103 | | VOA 105 | | OA 106 |

FIG. 1

200

Signal light

| Coupler 202 | | Gain medium 203 | | Gain flattening filter 204 |

| Pump light source 201 |

FIG. 2

300

Isolator 308 — Coupler 302 — Gain medium 303 — Gain flattening filter 304 — Isolator 309 — Optical splitter 307 — Photoelectric detector 306

Photoelectric detector 305 — Pump light source 301

FIG. 3

EP 4 325 745 A1

400

Isolator 308 | Coupler 302 | Gain medium 303 | Gain flattening filter 304 | Isolator 404 | Coupler 402 | Gain medium 403 | Isolator 309

Photoelectric detector 305

Pump light source 301

Pump light source 401

Optical splitter 307

Photoelectric detector 306

FIG. 4

FIG. 5

Determine design parameters of
an optical amplifier — S601

Initialize a GFF attenuation curve — S602

Set a latest GFF attenuation curve
in a GFF and adjust output optical
power of the optical amplifier — S603

Obtain a current gain curve of the
optical amplifier and obtain a GFF
correction attenuation curve — S604

Obtain a new GFF
attenuation curve — S606

Determine
whether the GFF correction
attenuation curve satisfies
a preset condition — S605

No

Yes

End an iteration — S607

FIG. 6

FIG. 7a

FIG. 7b

FIG. 7c

FIG. 8

FIG. 9

| Set an initial gain value of an optical amplifier | S1001 |

| Calculate a current residual non-flat gain | S1002 |

| Determine a to-be-adjusted optical amplifier and an adjustment amount based on the current residual non-flat gain | S1003 |

FIG. 10

1100

| Processor | 1102 |

| Memory | 1103 |

| Interface | 1101 |

FIG. 11

## INTERNATIONAL SEARCH REPORT

| International application No. |
|---|
| **PCT/CN2022/077656** |

**A.    CLASSIFICATION OF SUBJECT MATTER**

H04B 10/294(2013.01)i;  H01S 3/00(2006.01)i

According to International Patent Classification (IPC) or to both national classification and IPC

**B.    FIELDS SEARCHED**

Minimum documentation searched (classification system followed by classification symbols)

H04B，H01S

Documentation searched other than minimum documentation to the extent that such documents are included in the fields searched

Electronic data base consulted during the international search (name of data base and, where practicable, search terms used)

CNTXT, WPABS, ENTXT, ENTXTC, CJFD: 光, 放大器, 介质, 增益, 平坦, 滤波器, 曲线, 谱, 畸变, 对称, 抵消, 相反, 消除, optical, light, amplifier, medium, gain, flat+, filter, curv+, spectrum, aberra+, symmetr+, counteract+, opposit+, reverse, eliminat+

**C.    DOCUMENTS CONSIDERED TO BE RELEVANT**

| Category* | Citation of document, with indication, where appropriate, of the relevant passages | Relevant to claim No. |
|---|---|---|
| Y | CN 111628396 A (ACCELINK TECHNOLOGIES CO., LTD.) 04 September 2020 (2020-09-04)<br>    description, paragraphs [0002]-[0003], and figures 1-2 | 1-23 |
| Y | US 2003210844 A1 (SUMITOMO ELECTRIC INDUSTRIES) 13 November 2003 (2003-11-13)<br>    description, paragraph [0071], and figure 9 | 1-23 |
| A | CN 1410824 A (ZHEJIANG UNIVERSITY) 16 April 2003 (2003-04-16)<br>    entire document | 1-23 |
| A | US 6392788 B1 (SAMSUNG ELECTRONICS CO., LTD.) 21 May 2002 (2002-05-21)<br>    entire document | 1-23 |
| A | US 2014063592 A1 (NEC LABORATORIES AMERICA, INC.) 06 March 2014 (2014-03-06)<br>    entire document | 1-23 |

☐ Further documents are listed in the continuation of Box C.        ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **21 April 2022** | **06 May 2022** |

| Name and mailing address of the ISA/CN | Authorized officer |
|---|---|
| **China National Intellectual Property Administration (ISA/CN)**<br>**No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2022/077656**

| Patent document cited in search report | | | Publication date (day/month/year) | Patent family member(s) | | | Publication date (day/month/year) |
|---|---|---|---|---|---|---|---|
| CN | 111628396 | A | 04 September 2020 | None | | | |
| US | 2003210844 | A1 | 13 November 2003 | US | 2009185261 | A1 | 23 July 2009 |
| CN | 1410824 | A | 16 April 2003 | None | | | |
| US | 6392788 | B1 | 21 May 2002 | CA | 2254487 | A1 | 20 May 1999 |
| | | | | JP | H11233866 | A | 27 August 1999 |
| | | | | DE | 19853429 | A1 | 08 July 1999 |
| | | | | CN | 1218317 | A | 02 June 1999 |
| | | | | KR | 19990043973 | A | 25 June 1999 |
| | | | | FR | 2771221 | A1 | 21 May 1999 |
| | | | | GB | 9825131 | D0 | 13 January 1999 |
| | | | | BR | 9804714 | A | 03 November 1999 |
| US | 2014063592 | A1 | 06 March 2014 | None | | | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202110496993